# EUROPÄISCHE PATENTSCHRIFT

(11) **EP 1 957 306 B1**
(45) Veröffentlichungstag und Bekanntmachung des Hinweises auf die Patenterteilung: **30.09.2009**
(21) Anmeldenummer: 06818408.4
(22) Anmeldetag: 08.11.2006
(51) Int. Cl.: B60K 15/035

(54) **KRAFTSTOFFBEHÄLTER FÜR EIN KFZ**
FUEL TANK FOR A MOTOR VEHICLE
RESERVOIR DE CARBURANT POUR UN MOTEUR A COMBUSTION INTERNE

(30) Priorität: 07.12.2005 DE 102005058617
(43) Veröffentlichungstag der Anmeldung: 20.08.2008
(73) Patentinhaber: Kautex Textron GmbH & Co. KG., 53229 Bonn (DE)
(72) Erfinder: SCHÄFER, Thomas, 53227 Bonn (DE); GEBERT, Klaus, 47877 Willich (DE)
(74) Vertreter: Polypatent
(86) Internationale Anmeldenummer: PCT/EP2006/010683
(87) Internationale Veröffentlichungsnummer: WO 2007/065519

(56) Entgegenhaltungen:
- WO-A-20/05110797
- DE-A1- 19 932 713
- GB-A- 494 889

## Beschreibung

Die Erfindung betrifft einen Kraftstoffbehälter für ein Kfz, mit wenigstens einer Entlüftungseinrichtung, die an ein Kraftstoffdampffilter angeschlossen ist, wobei die Entlüftungseinrichtung wenigstens einen Sammelbehälter zur Aufnahme flüssigen Kraftstoffs umfasst.

Ein solcher Kraftstoffbehälter ist beispielsweise aus der EP 1 196 303 B1 bekannt. Der aus der EP 1 196 303 bekannte Kraftstoffbehälter umfasst Mittel zur Entlüftung desselben bei Betankung und bei Betrieb des Kfz. Die Entlüftungsleitungen sind in bekannter Art und Weise über einen Sammelbehälter an eine mit einem Aktivkohlefilter verbundene Druckausgleichsleitung angeschlossen.

Bei Betankung des Kraftstoffbehälters wird das im Behälter vorhandene Gas durch die einströmende Flüssigkeit verdrängt. Damit beim Betankungsvorgang keine Kohlenwasserstoffe an die Atmosphäre abgegeben werden, wird der bei der Betankung verdrängte Gasvolumenstrom üblicherweise über ein Kraftstoffdampffilter an die Atmosphäre abgegeben. Auch die beim Betrieb des Kfz infolge Evaporation des Kraftstoffs anfallende Gase werden über das Kraftstoffdampffilter gereinigt an die Atmosphäre abgegeben.

Die in dem Kraftstoffdampffilter vorhandene Aktivkohle darf nicht mit flüssigen Kohlenwasserstoffen benetzt werden, eine solche Benetzung würde die adsorptiven Eigenschaften der Aktivkohle beeinträchtigen. Aus diesem Grund ist es bekannt, dem Kraftstoffdampffilter in den Entlüftungsleitungen Sammelbehälter oder Ausperlbehälter vorzuschalten. In dem Sammelbehälter werden etwa anfallendes Kondensat sowie mitgerissene flüssige Kohlenwasserstoffpartikel abgeschieden und in geeigneter Art und Weise dem Entnahmevolumen des Kraftstoffbehälters wieder hinzugefügt.

Derartige Sammelbehälter sind teils außerhalb des Kraftstoffbehälters, teils innerhalb desselben angeordnet.

Zur Vermeidung von potentiellen Emissions- und Leckagestellen wird beispielsweise in der EP 1 196 303 vorgeschlagen, einen solchen Sammelbehälter innerhalb des Kraftstoffbehälters anzuordnen, sodass die Anordnung von Leitungen, die den Innenraum des Kraftstoffbehälters mit dem Sammelbehälter verbinden, entbehrlich ist.

Ein weiterer Vorteil eines innerhalb des Kraftstoffbehälters angeordneten Sammelbehälters ist darin zu sehen, dass dieser bei einem Crash des Kraftfahrzeugs nicht abreißen kann, da er geschützt innerhalb des Kraftstoffbehälters angeordnet ist.

Es ist ohne weiteres verständlich, dass der in dem Sammelbehälter bzw. Ausperlbehälter anfallende flüssige Kraftstoff wieder in das Entnahmevolumen des Kraftstoffbehälters zurückgeführt werden muss. Dies kann beispielsweise einfach mittels Schwerkraft durch eine mit Ventil versehene Ablauföffnung in dem Sammelbehälter erfolgen.

Je nach Druckverhältnissen in dem Kraftstoffbehälter und je nach Einbaulage des Sammelbehälters ist eine Schwerkraftentleerung desselben nicht immer wirkungsvoll möglich.

In der EP 1 196 303 B1 wird deshalb vorgeschlagen, den Sammelbehälter mit der Saugseite einer im Kraftstoffbehälter vorhandenen Saugstrahlpumpe zu verbinden. Die Saugstrahlpumpe kann beispielsweise durch den Kraftstoffrücklauf vom Motor beim Betrieb des Kfz angetrieben. Auf diese Art und Weise wird wirkungsvoll eine Absaugung des Sammelbehälters erreicht.

Eine solche Anordnung ist jedoch mit dem Nachteil behaftet, dass innerhalb des Kraftstoffbehälters zusätzliche Leitungen verlegt werden müssen, was insbesondere den Montageaüfwand bei der Komplettierung des Kraftstoffbehälters verhältnismäßig hoch werden lässt.

Ein Kraftstoffbehälter mit den Merkmalen des Oberbegriffs von Anspruch 1 ist beispielsweise aus der WO 2005/110797 A1 bekannt. Bei der dort vorgeschlagenen Lösung ist vorgesehen, die Kraftstoffpumpe zur Versorgung der Brennkraftmaschine innerhalb eines Sammelbehälters für die Entlüftungseinrichtung des Kraftstoffbehälters anzuordnen. Da die Entlüftungseinrichtung verhältnismäßig weit oben im Behälter angeordnet ist, muss bei Betrieb des Kfz der Kraftstoff aus einen oder mehreren Behältervolumina mittels Saugstrahlpumpen in die Sammeleinrichtung bzw. in den Ausperlbehälter der Entlüftungseinrichtung befördert werden. Dies ist konstruktiv verhältnismäßig aufwendig, zumal die zu der Kraftstoffpumpe führenden Leitungen entsprechend verlegt werden müssen.

Aus der DE 199 32 713 A1 ist ein Kraftstoffbehälter für ein Kraftfahrzeug bekannt, der zu seiner Entlüftung einen in seinem Innenraum angeordneten Sammelbehälter aufweist. Der Sammelbehälter ist mit einer außerhalb des Kraftstoffbehälters angeordneten, einen Aktivkohlefilter aufweisenden Druckausgleichsleitung verbunden. In den Sammelbehälter eindringender Kraftstoff wird von einer als Saugstrahlpumpe ausgebildeten Pumpe abgesaugt. Der Erfindung liegt daher die Aufgabe zugrunde, einen Kraftstoffbehälter der eingangs genannten Art so weiter zu bilden, dass eine wirkungsvolle Entleerung des Sammelbehälters mit möglichst einfachen Mitteln bewerkstelligt werden kann.

Die Aufgabe wird gelöst mit den Merkmalen des Anspruchs 1.

Vorteilhafte Ausgestaltungen der Erfindung ergeben sich aus den Unteransprüchen.

Der Kraftstoffbehälter gemäß der Erfindung zeichnet sich dadurch aus, dass innerhalb des Sammelbehälters eine Förderpumpe zur Entleerung desselben in das Entnahmevolumen des Kraftstoffbehälters angeordnet ist. Mit anderen Worten, die Förderpumpe zur aktiven Entleerung des Sammelbehälters ist vollständig in diesem integriert, sodass Leitungsanschlüsse zur Verbindung desselben mit einer außerhalb angeordneten Pumpe entbehrlich sind. Dies ist insbesondere deshalb vorteilhaft, da die Montage von Einbauten im Kraftstoffbehälter in der Regel nur durch eine oder mehrere Revisionsöffnungen erfolgen kann, deren Größe so bemessen, dass in diese von Hand hineingegriffen werden kann, die Montage dann allerdings ohne Sicht durchgeführt werden muss. Im Ergebnis bedeutet dies einen zusätzlichen Aufwand für jede im Behälter zu verlegende und zu verclipsende Leitung, Saugstrahlpumpe oder dergleichen. Schließlich ist es erforderlich, solche Leitungen, wie vorstehend bereits angedeutet, an der Behälterwandung zu fixieren. Insoweit stellt die erfindungsgemäße Lösung eine wesentliche Vereinfachung der Montage des Kraftstoffbehälters dar.

Besonders vorteilhaft ist es, dass die Förderpumpe über wenigstens ein Flügelrad angetrieben wird, welches so angeordnet ist, dass es durch den durch den Sammelbehälter geführten Entlüftungsstrom in Rotation versetzbar ist. Der Antrieb der Förderpumpe ist also in einer besonders vorteilhaften Variante des erfindungsgemäßen Kraftstoffbehälters als Axialturbine ausgebildet, die den Entlüftungsvolumenstrom während der Betankung und im Betrieb nutzt. Hierzu eignen sich besonders sogenannte "On-Board-Fuel-Vapor-Recovery" Systeme, die auf dem amerikanischen Markt verbreitet sind. Dabei wird der bei der Betankung anfallende Gasvolumenstrom größtenteils über das Kraftstoffdampffilter geführt, die Befüllöffnung des Kraftstoffbehälters ist während des Betankungsvorgangs gegen die Zapfpistole abgedichtet.

Zweckmäßigerweise ist das Flügelrad mit einem Pumpenrad der Förderpumpe auf einer gemeinsamen Welle angeordnet.

Die Förderpumpe kann beispielsweise als Seitenkanalpumpe ausgebildet sein. Seitenkanalpumpen besitzen den Vorzug, dass sie besonders kleinbauend sind und wenige bewegliche Teile aufweisen.

Bei einer Variante des Kraftstoffbehälters gemäß der Erfindung ist vorgesehen, dass das Flügelrad innerhalb eines Gehäuses mit einem Innenteil und einem Außenteil angeordnet ist, dass das Innenteil einen Kernrohrabschnitt bildet, der das Flügelrad umschließt und dass das Außenteil einen Mahtelrohrabschnitt bildet, der mit dem Kernrohrabschnitt einen sich in Strömungsrichtung des Entlüftungsstromes verengenden Ansaugspalt bildet.

Hierdurch wird die das Flügelrad treibende Entlüftungsströmung innerhalb des Gehäuses bzw. innerhalb des Ansaugspalts beschleunigt, sodass eine besonders wirkungsvolle Nutzung der kinetischen Energie der Gasströmung gewährleistet ist.

Zweckmäßigerweise ist der Außenteil als sich in Strömungsrichtung erweiternder Becher ausgebildet, dessen Boden von der Welle des Flügelrades bzw. Pumpenrades durchsetzt ist. Die Anordnung ist dabei so gewählt, dass der Gaseintritt und der Gasaustritt aus dem Gehäuse auf einer Seite desselben angeordnet sind.

Die Förderpumpe kann beispielsweise mit ihrer Druckseite an eine Auslassöffnung des Sammelbehälters angeschlossen sein, die in den Kraftstoffbehälter mündet. Diese Auslassöffnung kann mit einem Rückschlagventil verschlossen sein.

Bei einer alternativen Ausgestaltung des Kraftstoffbehälters gemäß der Erfindung umfasst das Sammelgehäuse zwei Kammern, die über eine Überströmöffnung miteinander kommunizieren, wobei eine erste Kammer als Flüssigkeitssammelraum und eine zweite Kammer als Gassammelraum vorgesehen sind, die Überströmöffnung mittels eines füllstandsgeschaltenden Ventils verschließbar ist und die Förderpumpe so angeschlossen ist, dass ein Verschließen der Überströmöffnung einen Druckanstieg in dem Flüssigkeitssammelraum bewirkt, sodass eine Entleerung desselben über eine Auslassöffnung in das Entnahmevolumen des Kraftstoffbehälters erfolgt. Bei dieser Variante der Ausbildung des Sammelbehälters wird der in dem Flüssigkeitssammelraum entstehende Kraftstoff nicht unmittelbar über die Förderpumpe gefördert, vielmehr dient die Förderpumpe nur zur Druckerhöhung und somit zur indirekten Entleerung des Flüssigkeitssammelraums, wenn ein bestimmter Flüssigkeitspegel in diesem erreicht ist.

Bei dieser Ausführungsform der Erfindung kann die Förderpumpe saugseitig an den Gassammelraum angeschlossen sein. Die Saugseite der Pumpe kann alternativ auch an das Entnahmevolumen des Kraftstoffbehälters angeschlossen sein.

Zweckmäßigerweise sind die Förderpumpe und deren Antrieb zu einer Baueinheit zusammengefasst.

Die Erfindung wird nachstehend anhand eines in den Zeichnungen dargestellten Ausführungsbeispiels erläutert.

Es zeigen:
Figur 1 eine schematische Ansicht des Kraftstoffbehälters gemäß der Erfindung,
Figur 2 eine vergrößerte Schnittansicht durch den in Figur 1 dargestellten Sammelbehälter nach einem ersten Ausführungsbeispiel der Erfindung und
Figur 3 eine Schnittansicht einer alternativen Ausgestaltung des Sammelbehälters.

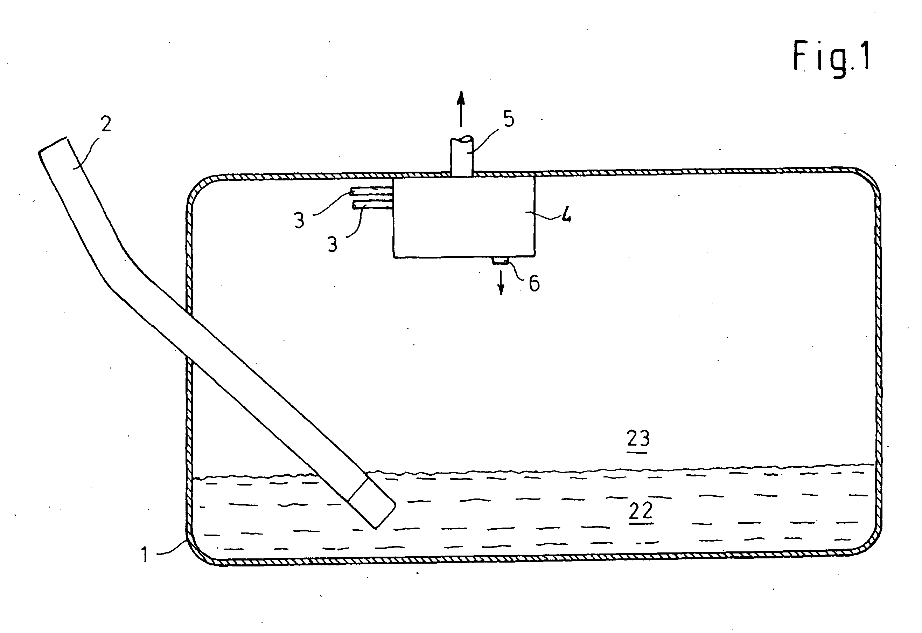

Der in Figur 1 dargestellte Kraftstoffbehälter 1 umfasst in bekannter Art und Weise ein Einführrohr 2 sowie nicht dargestellte Mittel zur Förderung und Entnahme von Kraftstoff und Mittel zur Be- und Entlüftung des Kraftstoffbehälters 1 während der Betankung und des Betriebs. In der Regel wird der Kraftstoffbehälter 1 beispielsweise als Kunststoffbehälter ausgebildet sein, der einstückig durch Extrusionsblasformen erhalten wurde. Dieser kann eine verhältnismäßig komplizierte kammerartige Struktur mit verschiedenen Teilvolumina aufweisen. Der in Figur 1 dargestellte Kraftstoffbehälter 1 ist zu Zwecken der Veranschaulichung stark vereinfacht dargestellt.

Zur Entlüftung des Kraftstoffbehälters 1 bei der Betankung oder beim Betrieb sind in diesem verschiedene Belüftungspunkte vorgesehen, die jeweils mit Ventilen geschaltet sein können. Von den Ventilen sind Entlüftungsleitungen 3 über einen Sammelbehälter 4 zu einem nicht dargestellten Kraftstoffdampffilter (AKF) geführt.

Hierzu ist der in den Figuren dargestellte Sammelbehälter 4 an eine mit 3b bezeichnete Betriebsentlüftungsleitung und eine mit 3a bezeichnete Betankungsentlüftungsleitung angeschlossen. Mit 5 ist die aus dem Kraftstoffbehälter 1 zu einem Aktivkohlefilter geführte Druckausgleichsleitung bezeichnet. Weiterhin ist an dem Sammelbehälter 4 eine Ablauföffnung 6 vorgesehen, die einem Rückschlagventil 7 verschlossen ist.

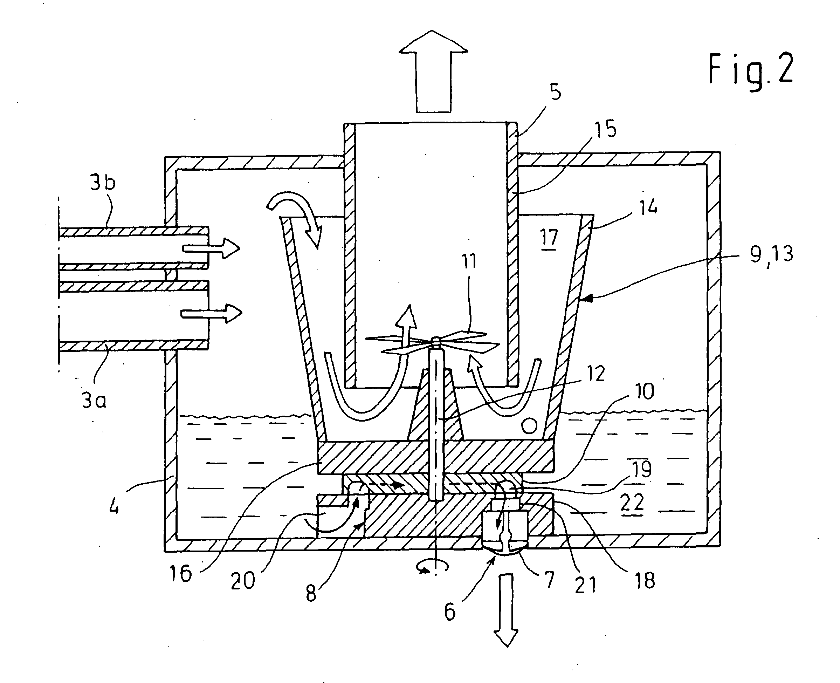

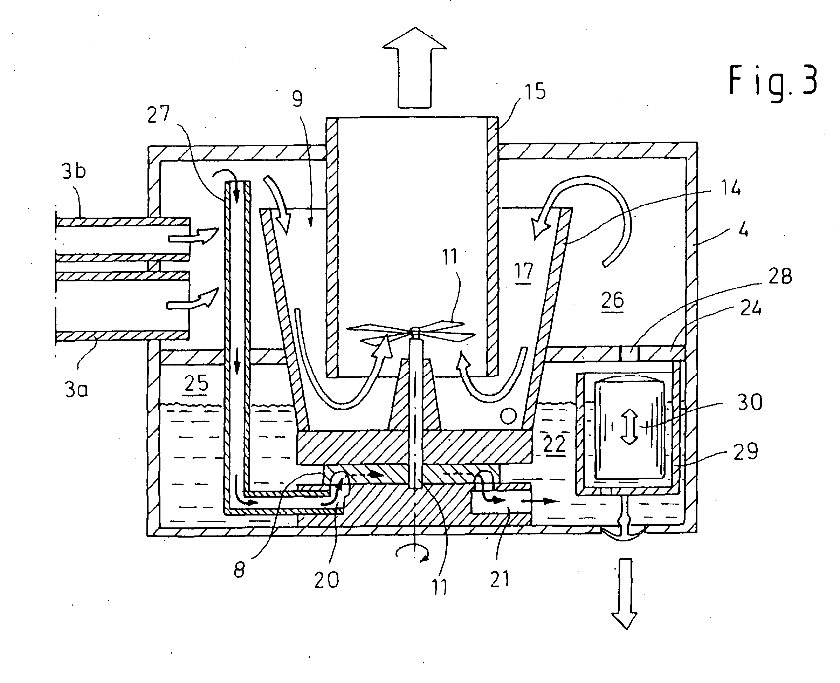

Die Größenverhältnisse der in den Figuren 2 und 3 eingezeichneten Leitungen 3, 5 lassen keinerlei Rückschlüsse auf deren tatsächliche Dimensionierung im Verhältnis untereinander zu. Auch die Figuren 2 und 3 sind stark vereinfachte schematische Ansichten.

Es wird zunächst Bezug genommen auf Figur 2, in der der Sammelbehälter 4 vergrößert im Schnitt dargestellt ist. In diesem ist eine Förderpumpe 8 zur Entleerung desselben mitsamt einem zugehörigen Antrieb 9 angeordnet. Wie nachstehend noch beschrieben wird, ist der Antrieb 9 als Axialturbine ausgebildet, die über den Entlüftungsvolumenstrom bzw. über das bei der Entlüftung durch den Sammelbehälter 4 geführte kohlenstoffangereicherte Gas angetrieben wird.

Die Förderpumpe 8 ist als an und für sich bekannte Seitenkanalpumpe ausgebildet, deren Pumpenrad 10 mit einem zum Antrieb gehörenden Flügelrad 11 auf einer gemeinsamen Welle 12 angeordnet ist. Das Flügelrad 11 wiederum ist in einem zweiteiligen Gehäuse 13 angeordnet, wobei das Gehäuse einen Außenteil 14 und einen Innenteil 15 umfasst. Der Außenteil 14 bildet ein Mantelrohr und ist etwa becherförmig ausgebildet und erweitert sich konisch auf seiner dem Pumpenrad 10 abliegenden Seite. Der Boden 16 des Außenteils 14 ist von der Welle 12 durchsetzt und bildet die funktionale Trennung zwischen Antrieb 9 und Pumpe. Innerhalb des Außenteils 14 ist das tubusförmige Innenteil 15, das das Flügelrad 11 umschließt, so angeordnet, dass zwischen Innenteil 15 und Außenteil 14 ein sich in Strömungsrichtung konisch verengte Ansaugspalt 17 gebildet wird.

Durch die Querschnittsverringerung des Ansaugspalts 17 erfährt die Gasströmung eine Beschleunigung. Am Boden 16 des Außenteils 14 wird die Gasströmung schließlich umgelenkt und axial durch das Innenteil 15 geleitet, wo diese ein Antreiben des Flügelrades 11 bewirkt. Das Flügelrad 11 wiederum dreht die Welle 12 und mit dieser das Pumpenrad 10. Das Pumpenrad 10 bildet mit dem Pumpengehäuse18 einen Seiten kanal 19, der in bekannter Art und Weise spiralförmig verlaufend angeordnet ist und eine Einlassöffnung 20 (Saugseite)und eine Auslassöffnung 21 (Druckseite) der Förderpumpe 8 verbindet.

Bei Betankung des Kfz treibt der durch die Betankungsentlüftungsleitung 3a einströmende Gasvolumenstrom das Flügelrad 11 und somit auch das Pumpenrad 10. Der nur andeutungsweise dargestellte flüssige Kraftstoff 22 wird durch die Einlassöffnung 20 angesaugt und durch die Auslassöffnung 21 gegen das Rückschlagventil 7 in das Entnahmevolumen 23 des Kraftstoffbehälters 1 gepumpt.

Es wird nun Bezug genommen auf die in Figur 3 gezeigte Ausführungsform des Sammelbehälters 4, der durch eine Zwischenwand 24 in zwei Kammern unterteilt ist, wobei eine erste Kammer als Flüssigkeitssammelraum 25 und eine zweite Kammer als Gassammelraum 26 oder als Gaseinströmkammer ausgebildet.

Bei dem in Figur 3 dargestellten Ausführungsbeispiel sind gleiche Bauteile mit gleichen Bezugszeichen versehen.

Die Einheit bestehend aus Förderpumpe 8 und Antrieb 9 durchsetzt die Zwischenwand 24 des Sammelbehälters 4, wobei das Außenteil 14 gegen die Zwischenwand 24 abgedichtet ist. Mit 27 ist ein Ansaugschnorchel bezeichnet, der an die Einlassöffnung 20 der Förderpumpe 8 angeschlossen ist und der ebenfalls die Zwischenwand 24 durchsetzt und in den Gassammelraum 26 mündet. Weiterhin ist in der Zwischenwand 24 eine Überströmöffnung 28 vorgesehen, über die der Gassammelraum 26 und der Flüssigkeitssammelraum 25 miteinander kommunizieren, solange der Füllstand des flüssigen Kraftstoffs 22 in dem Flüssigkeitssammelraum 25 einen gewissen Pegel nicht überschreitet. Die Überströmöffnung 28 ist mittels eines Schwimmerventils 29 bei Überschreiten eines bestimmten Füllstandes verschließbar, wobei der Ventilkörper 30 durch den Kraftstoff 22 angehoben wird und die Überströmöffnung 28 verschließt.

Insbesondere bei der Betankung treibt der einströmende Gasvolumenstrom, der über die Druckausgleichsleitung 5 zu dem nicht dargestellten Aktivkohlefilter geführt wird, das Flügelrad 11 und mit diesem das Pumpenrad 10 der Förderpumpe 8 an. Über den Schnorchel 27 zieht die Förderpumpe 8 Gas aus dem Gassammelraum 26 in den Flüssigkeitssammelraum 25. Da der Gassammelraum 26 und der Flüssigkeitssammelraum 25 miteinander kommunizieren, arbeitet die Förderpumpe 8 quasi im Leerlauf. In dem Flüssigkeitssammelraum 25 sammelt sich der kondensierte oder ausgeperlte Kraftstoff 22 an, solange bis der Ventilkörper 30 aufschwimmt und die Überströmöffnung 28 verschließt. Dies bewirkt, dass die Förderpumpe 8 einen Druckanstieg in dem Flüssigkeitssammelraum 25 erzeugt, der eine Entleerung des Flüssigkeitssammelraums 25 gegen die Schließkraft des Rückschlagventils 7 bewirkt. Das Rückschlagventil 7 ist als Flatterventil mit einer Elastomerscheibe als Verschlusskörper ausgebildet, sodass dessen Schließkraft verhältnismäßig moderat ist.

### Bezugszeichenliste

- 1.: Kraftstoffbehälter
- 2.: Einführrohr
- 3.: Entlüftungsleitungen
- 3a: Betankungsentlüftungsleitung
- 3b: Betriebsentlüftungsleitung
- 4.: Sammelbehälter
- 5.: Druckausgleichsleitung
- 6.: Ablauföffnung
- 7.: Rückschlagventil
- 8.: Förderpumpe
- 9.: Antrieb
- 10.: Pumpenrad
- 11.: Flügelrad
- 12.: Welle
- 13.: Gehäuse
- 14.: Außenteil
- 15.: Innenteil
- 16.: Boden des Außenteils
- 17.: Ansaugspalt
- 18.: Pumpengehäuse
- 19.: Seitenkanal
- 20.: Einlassöffnung
- 21.: Auslassöffnung
- 22.: flüssiger Kraftstoff
- 23.: Entnahmevolumen
- 24.: Zwischenwand
- 25.: Flüssigkeitssammelraum
- 26.: Gassammelraum
- 27.: Schnorchel
- 28.: Überströmöffnung
- 29.: Schwimmerventil
- 30.: Ventilkörper

## Patentansprüche

1. Kraftstoffbehälter (1) für ein Kfz, mit wenigstens einer Entlüftungseinrichtung, die an ein Kraftstoffdampffilter angeschlossen ist, wobei die Entlüftungseinrichtung wenigstens einen Sammelbehälter (4) zur Aufnahme flüssigen Kraftstoffs umfasst und wobei innerhalb des Sammelbehälters (4) eine Förderpumpe zur Entleerung desselben in das Entnahmevolumen (23) des Kraftstoffbehälters (1) angeordnet ist, **dadurch gekennzeichnet, dass** die Förderpumpe (8) über wenigstens ein Flügelrad (11) angetrieben wird, welches so angeordnet ist, dass es durch den durch den Sammelbehälter (4) geführten Entlüftungsstrom in Rotation versetzbar ist.

2. Kraftstoffbehälter nach Anspruch 1, **dadurch gekennzeichnet, dass** das Flügelrad (11) mit einem Pumpenrad (10) der Förderpumpe (8) auf einer gemeinsamen Welle (12) angeordnet ist.

3. Kraftstoffbehälter nach einem der Ansprüche 1 oder 2, **dadurch gekennzeichnet, dass** die Förderpumpe (8) als Seitenkanalpumpe ausgebildet ist.

4. Kraftstoffbehälter nach einem der Ansprüche 1 bis 3, **dadurch gekennzeichnet, dass** das Flügelrad (11) innerhalb eines Gehäuses (13) mit einem Innenteil (15) und einem Außenteil (14) angeordnet ist, dass das Innenteil (15) einen Kernrohrabschnitt bildet, der das Flügelrad (11) umschließt und dass das Außenteil (14) einen Mantelrohrabschnitt bildet, der mit dem Kernrohrabschnitt einen sich in Strömungsrichtung des Entlüftungsstroms verengenden Ansaugspalt (17) bildet.

5. Kraftstoffbehälter nach Anspruch 4, **dadurch gekennzeichnet, dass** das Außenteil (14) als sich in Strömungsrichtung konisch erweiternder Becher ausgebildet ist, dessen Boden (16) von der Welle (12) des Flügelrades (11) bzw. Pumpenrades (10) durchsetzt ist.

6. Kraftstoffbehälter nach einem der Ansprüche 1 bis 5, **dadurch gekennzeichnet, dass** die Förderpumpe (8) mit ihrer Druckseite an eine Auslassöffnung (21) des Sammelbehälters (4) angeschlossen ist, die in den Kraftstoffbehälter mündet.

7. Kraftstoffbehälter nach einem der Ansprüche 1 bis 6, **dadurch gekennzeichnet, dass** das Sammelgehäuse (4) zwei Kammern umfasst, die über eine Überströmöffnung (28) miteinander kommunizieren, dass eine erste Kammer als Flüssigkeitssammelraum (25) und eine zweite Kammer als Gassammelraum (26) vorgesehen ist, dass die Überströmöffnung (28) mittels eines füllstandsgeschalteten Ventils verschließbar ist und dass die Förderpumpe (8) so angeschlossen ist, dass ein Verschließen der Überströmöffnung (28) einen Druckanstieg in dem Flüssigkeitssammelraum (25) bewirkt, sodass eine Entleerung desselben über eine Auslassöffnung (21) in das Entnahmevolumen (23) des Kraftstoffbehälters erfolgt.

8. Kraftstoffbehälter nach Anspruch 7, **dadurch gekennzeichnet, dass** die Förderpumpe (8) saugseitig an den Gassammelraum (26) angeschlossen ist.

9. Kraftstoffbehälter nach einem der Ansprüche 1 bis 8, **dadurch gekennzeichnet, dass** die Förderpumpe (8) und deren Antrieb (9) zu einer Baueinheit zusammengefasst sind.

## Claims

1. Fuel tank (1) for a motor vehicle, with at least one venting device which is connected to a fuel vapour filter, wherein the venting device comprises at least one collecting tank (4) for receiving liquid fuel, and wherein disposed inside the collecting tank (4) is a delivery pump for emptying the latter into the discharge volume (23) of the fuel tank (1), **characterised in that** the delivery pump (8) is driven by way of at least one vane wheel (11) which is disposed so that it can be caused to rotate by the venting stream which is passed through the collecting tank (4).

2. Fuel tank according to Claim 1, **characterised in that** the vane wheel (11) is disposed with an impeller (10) of the delivery pump (8) on a common shaft (12).

3. Fuel tank according to either of Claims 1 and 2, **characterised in that** the delivery pump (8) is formed as a side channel pump.

4. Fuel tank according to any one of Claims 1 to 3, **characterised in that** the vane wheel (11) is disposed inside a housing (13) with an inner part (15) and an outer part (14), that the inner part (15) forms a core tube portion which encloses the vane wheel (11), and that the outer part (14) forms a casing tube portion which, with the core tube portion, forms an intake gap (17) which narrows in the flow direction of the venting stream.

5. Fuel tank according to Claim 4, **characterised in that** the outer part (14) is formed as a bowl which widens conically in the flow direction and the bottom (16) of which is penetrated by the shaft (12) of the vane wheel (11) and impeller (10).

6. Fuel tank according to any one of Claims 1 to 5, **characterised in that** the delivery pump (8) is connected with its delivery side to an outlet opening (21) of the collecting tank (4) which leads into the fuel tank.

7. Fuel tank according to any one of Claims 1 to 6, **characterised in that** the collecting housing (4) comprises two chambers which communicate with one another by way of an overflow opening (28), that a first chamber is provided as a liquid collecting space (25) and a second chamber is provided as a gas collecting space (26), that the overflow opening (28) can be closed by means of a filling level-switched valve, and that the delivery pump (8) is connected so that closure of the overflow opening (28) causes a rise in pressure in the liquid collecting space (25), so that the latter is emptied by way of an outlet opening (21) into the discharge volume (23) of the fuel tank.

8. Fuel tank according to Claim 7, **characterised in that** the delivery pump (8) is connected to the gas collecting space (26) on the suction side.

9. Fuel tank according to any one of Claims 1 to 8, **characterised in that** the delivery pump (8) and the drive (9) thereof are combined to form a construction unit.

## Revendications

1. Réservoir de carburant (1) pour un véhicule automobile avec au moins un dispositif de purge qui est raccordé à un filtre à vapeur de carburant, le dispositif de purge comprenant au moins un vase collecteur (4) pour recueillir le carburant liquide et une pompe d'alimentation étant disposée à l'intérieur du vase collecteur (4) pour sa vidange dans le volume de soutirage (23) du réservoir de carburant (1), **caractérisé en ce que** la pompe d'alimentation (8) est entraînée par l'intermédiaire d'au moins une roue à palettes (11) qui est disposée de telle sorte qu'elle puisse être mise en rotation par le flux de purge guidé par le vase collecteur (4).

2. Réservoir de carburant selon la revendication 1, **caractérisé en ce que** la roue à palettes (11) est disposée sur un axe commun (12) avec une roue de pompe (10) de la pompe d'alimentation (8).

3. Réservoir de carburant selon l'une des revendications 1 ou 2, **caractérisé en ce que** la pompe d'alimentation (8) est conçue comme une pompe à canal latéral.

4. Réservoir de carburant selon l'une des revendications 1 à 3, **caractérisé en ce que** la roue à palettes (11) est disposée dans un boîtier (13) avec une partie interne (15) et une partie externe (14), que la partie interne (15) forme une section de tube carottier qui renferme la roue à palettes (11) et que la partie externe (14) forme une section de tubage qui forme avec la section de tube carottier une fente d'aspiration (17) se rétrécissant dans le sens d'écoulement du flux de purge.

5. Réservoir de carburant selon la revendication 4, **caractérisé en ce que** la partie externe (14) est conçue comme un godet s'élargissant coniquement dans la direction du flux dont le fond (16) est traversé par l'axe (12) de la roue à palettes (11) ou de la roue de pompe (10).

6. Réservoir de carburant selon l'une des revendications 1 à 5, **caractérisé en ce que** la pompe d'alimentation (8) est raccordée par son côté pression à une ouverture de sortie (21) du vase collecteur (4) qui débouche dans le réservoir de carburant.

7. Réservoir de carburant selon l'une des revendications 1 à 6, **caractérisé en ce que** le vase collecteur (4) comprend deux compartiments qui communiquent entre eux par l'intermédiaire d'une ouverture de trop-plein (28), qu'un premier compartiment est prévu comme un espace collecteur de liquide (25) et un deuxième compartiment comme un espace collecteur de gaz (26), que l'ouverture de trop-plein (28) peut être fermée à l'aide d'une soupape commutée par le niveau de remplissage et que la pompe d'alimentation (8) est raccordée de telle sorte qu'une fermeture de l'ouverture de trop-plein (28) provoque une augmentation de pression dans l'espace collecteur de liquide (25) de telle sorte qu'une vidange de celui-ci soit effectuée par l'intermédiaire d'une ouverture de sortie (21) dans le volume de soutirage (23) du réservoir de carburant.

8. Réservoir de carburant selon la revendication 7, **caractérisé en ce que** la pompe d'alimentation (8) est raccordée côté aspiration à l'espace collecteur de gaz (26).

9. Réservoir de carburant selon l'une des revendications 1 à 8, **caractérisé en ce que** la pompe d'alimentation (8) et son entraînement (9) sont réunis en un module.
